# EUROPEAN PATENT SPECIFICATION

(11) **EP 0 963 929 B1**
(45) Date of publication and mention of the grant of the patent: **22.10.2003**
(21) Application number: 99850100.1
(22) Date of filing: 08.06.1999
(51) Int. Cl.: B65G 47/80, B65G 47/244

(54) **Equipment for the automatic loading of multiple arranged items on the same unit of a cross-belt switching machine**
Vorrichtung zum automatischen Laden einer Vielzahl von Artikeln angeordnet auf dieselbe Einheit einer Sortiermaschine mit Querband
Dispositif pour le chargement automatique d'objets multiples agencés sur une même unité d'une machine de triage à bande transversale

(30) Priority: 12.06.1998 IT MI981342
(43) Date of publication of application: 15.12.1999
(73) Proprietor: Sandvik AB, 811 81 Sandviken (SE)
(72) Inventor: Soldavini, Attilio, 21010 Ferno-VA (IT)
(74) Representative: Taquist, Lennart

(56) References cited:
- EP-A- 0 519 339
- DE-B- 1 296 093
- FR-A- 2 562 519
- GB-A- 1 395 490
- US-A- 4 519 493

## Description

This invention proposes an equipment unit that allows the automatic loading of multiple items on the same unit of a cross-belt switching machine according to the preamble of claim 1.

The scope of the invention is to achieve the required functions for the unloading of the items, especially in pairs, on a switching machine of the so-called "cross belt" type, as described for example in the European patents No. EP 0.481.341, EP 0.518.180 and EP 0.556.866 by the same Applicant.

This is a machine arranging the items on units constituted by trolleys along a path, each fitted with a small rotating mat which unloads the items to the side of the machine, whenever the same passes certain collecting systems assigned to each object.

In the machine described in the above patent the belts are of adequate length to accept at least two items set side-by-side, thus allowing, thanks to an appropriate handling process, to double the productivity of the existing machines.

In particular, this result is achieved by pre-positioning the two items arranged on the belt of the switching unit so as to allow their switching to their respective destinations by two successive starts of the belt.

To ensure a proper handling of this equipment it is therefore essential to load the items in pairs in a precise order capable of observing the unloading order, and to meet the need, for this purpose, to provide some means allowing the items to be loaded in a pre-established order, without thereby affecting the loading time and requiring complex procedures or some preliminary handling of the items.

It is also appropriate and essential that the items be loaded onto the machine in a manner as far as possible lined up with the edges of the small mat of the unit, so as to achieve a greater precision at the time of unloading it.

It is in fact worth considering that these machines move forward at speeds of a few meters per second, and that in any machines fitted with numerous outlets, the latter are of a size hardly larger than that of the items to be switched.

It is therefore necessary that the unloading operation, of a ballistic type, also occur with the utmost precision.

GB 1 395 490 discloses a device for turning conveyed articles such as bags having one stitched and one unstitched end so that the stitched and unstitched ends face in desired directions. Articles are conveyed in a first direction along a conveyor, and their orientation is sensed. If it is desired to change the orientation of an article, flaps are lowered from a flap carrier toward the conveyor and capture the article. Then a motor turns the flap carrier and the article through 180° relative to the conveyor.

The most advanced existing machines comprise a series of loading stations constituted by a succession of rotating mats designed to load the items on the trolleys.

In particular, switching machines are known in which the loading station mats are arranged at a 45° angle with respect to the machine, so that the loading of the items can be carried out at a speed involving a component, in the direction of the forward motion of the trolleys, equal to the speed of the latter.

It is then possible, by appropriately starting the trolley mat at the loading instant, to feed the item onto the machine at an essentially zero relative speed, except for some later dampening of the push imparted to the item, by suitably slowing down the mat.

All this can provide an idea of the complexity of the handling systems of these machines. This invention now proposes an equipment unit for the automatic loading of multiple items in a cross-belt switching machine, which allows arranging the items in the order of their unloading and to feed them onto the machine while observing the proper relative positioning and the expected alignement.

These and other purposes of the machine are achieved by an equipment according to the characterizing section of claim 1.

This invention will now be described in detail, for exemplifying and non-limiting purposes, with reference to the enclosed drawings, in which:
- Figure 1 is a simplified ground view of a loading equipment unit according to the invention,
- Figure 2 is a simplified partial view of the equipment unit shown in Figure 1.
- Figure 3 to 7 are simplified prospective views of a loading station according to the invention, during the various phases of the feeding process of the items to the machine.

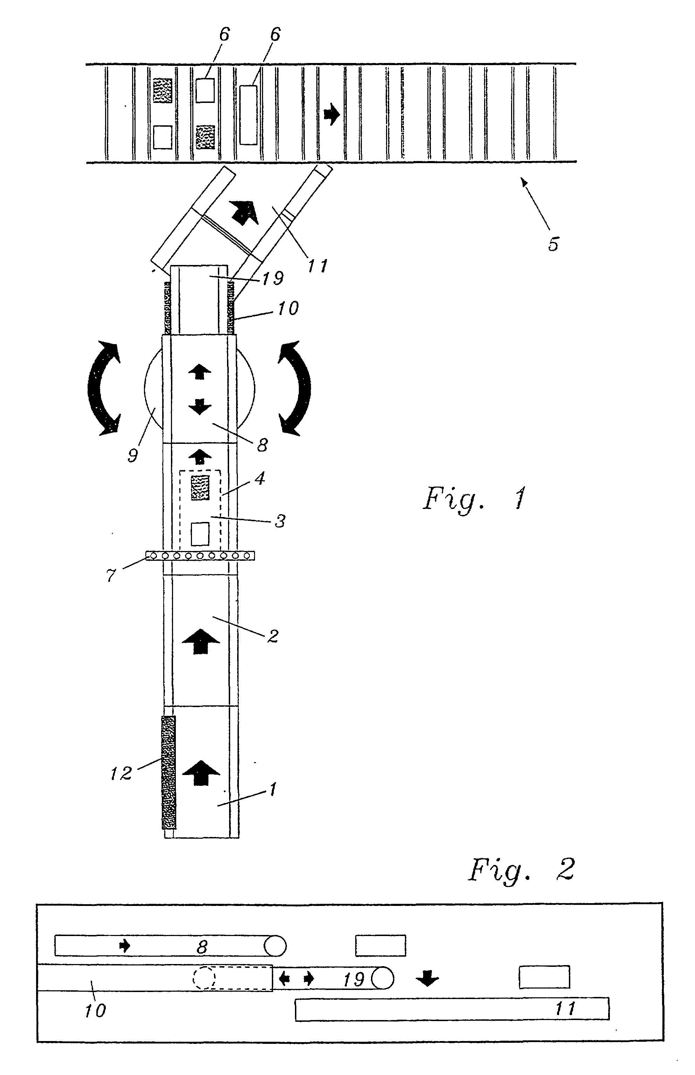

With reference to Figure 1, the loading station comprises a first conveyor belt 1, on which an operator deposits the items to be switched in succession, by matching them against a fixed reference 12, constituted for example by an edge of the same belt. A second belt 2 is arranged downstream of the belt 1, which is similar to the latter and can be started to move at a different speed, in particular to move forward at a speed greater than that of belt 1.

The combination of the belts 1 and 2 is then used to extract the individual items from the succession of items, and to regulate their reciprocal distance so that the two objects can be transferred to a downstream conveyor 3 arranged in such a manner as to occupy a space on the belt, indicated by the number 4, essentially corresponding to the space that the machine makes available to both items on the cell of the switching machine.

The latter is illustrated in a simplified manner, as shown by the number 5. The individual cells, each composed of a trolley fitted with a small rotating mat designed to accept the items, are indicated by the number 6.

The pair of items on belt 3 is checked by a scanner or bar-code reading device 7, which informs the central control unit of the machine of the items' final destination.

A further belt 8 is arranged downstream of the belt 3, mounted on a support 9 which can be commanded to rotate 180° around a substantially vertical axis, so as to invert the order of the items carried onboard the belt 8.

An additional conveyor belt 19 is arranged downstream of the rotating belt 8, on which a sliding frame 10 is mounted between two positions.

In one of these positions the belt 19 is fully retracted below the belt 8, while moving fully forward in the other so as to end up above the loading belt 11, which handles the feeding of the items to the switching machine.

The switching machine moves in an essentially crosswise direction with respect to the belts 1, 2, 3, 8 and 19, while the belt 11 is arranged at a 45° angle with respect to the other belts and to the switching machine.

According to the invention, the equipment unit described above operates as follows:

The operator arranges the items on the feeding belt 1, while lining them up against the reference wall 12.

The belt 1 directs the items to the belt 2, which is induced to rotate at a greater speed than the former, so as to space out the items.

From the belt 2 the items pass over to the next belt 3, where a sensor 7 checks the destination of each of them.

During this phase the belt 3 moves forward at the same speed as the belt 2, so as to keep the same distance between the two items.

On the belt 3 the items keep a distance such as to occupy a position corresponding on the whole to the space that the machine makes available to the two items on the switching machine assigned to them.

The relative positioning of the two items can occur by simply acting on the speed of the two adjacent belts, or if necessary also by checking the passing and the size of the items by using the same scanner 7 and consequently varying, thanks to the software, the speed of the mat 4, so as to load the following item in the appropriate position.

Once the destinations of the two items are known, two situations may arise: in the simplest case, the arrangement of the two items already reflects the desired position for loading onto the machine, so that no inverting of the loading order is needed, or in another case the arrangement of the items differs from the expected type, so that the order must be inverted.

In the latter case, after the items have been transferred from the belt 3 to the belt 8, the support 9 is rotated 180°, so that the items are arranged in an inverted order with respect to the previous situation.

The passing of the items from the belt 3 to the belt 8 occurs while the belts move at the same speed, so as to maintain the same reciprocal arrangement of the items.

From the belt 8 the items must be transferred to the inclined belt 11, which takes care of feeding them to the machine.

In order to prevent the items from rotating or losing the necessary alignement while passing from one belt to another, it is appropriate to have this transfer occur at a relative speed of essential zero between the items and the receiving belt.

For this reason and for transferring the items from belt 8 to belt 11, an intermediate transferring belt 19 is provided, which may be a telescopic belt or, as in the case shown in the figure, a small frame-mounted rotating mat capable of sliding forward in a direction parallel to the small mat's rotating direction.

The driving unit governing the forward and return motion of the frame 10 may be adjusted in such a manner that the forward motion matches the sliding motion of the belts 8 and 19.

This makes it possible to move the belt 19 forward at the same speed as the belt 8 while transferring the items (or keeping the belt 19 still and advancing the frame 10 together with the belt, while unloading all the items from the belt 8).

Once all the items have been transferred to the belt 19, they can be deposited on the belt 11 while the same is standing still.

For this purpose the small mat 19 is rotated while simultaneously reversing the frame 10 at the same speed as the small mat 19.

This results, as shown in Figure 2, in all the items falling onto the belt 11 at an essentially zero relative speed, while nevertheless maintaining, even in this passing action, both their relative spacing and proper alignement.

At this point the loading belt 11 holds a pair of items already arranged in the proper direction and at the right spacing, ready to be loaded onto the machine in accordance with the known technologies.

The succession of the loading phases is better illustrated in the prospective views offered in the Figures from 3 to 7.

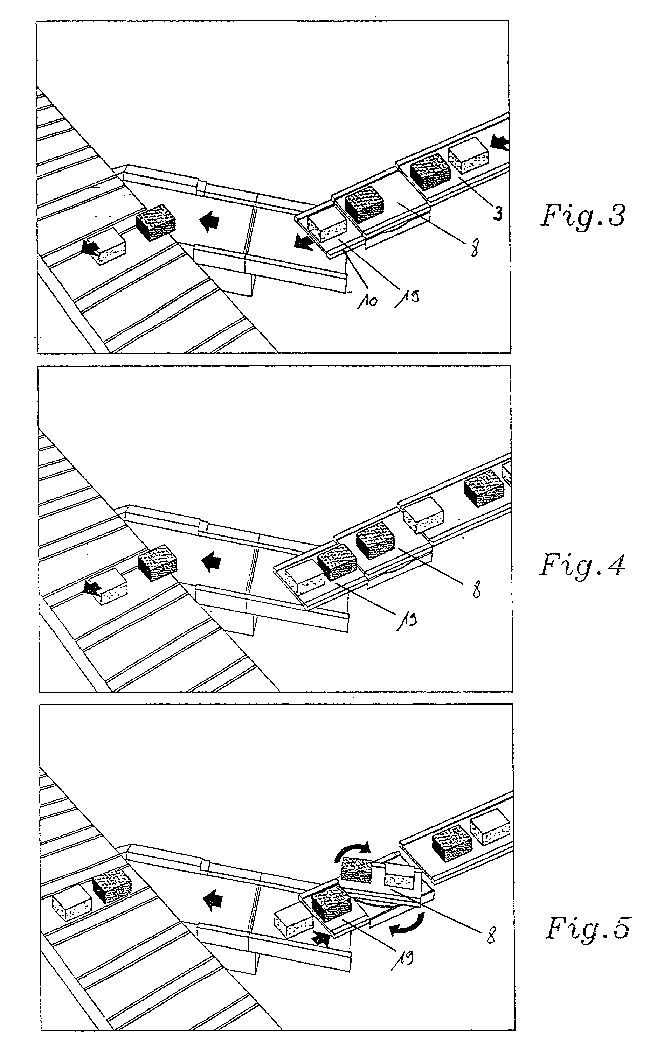

In the situation of Figure 3, a pair of packages are arranged on the belt 3, ready to be transferred to the rotating belt 8.

At the same time, the packages present on the rotating belt 8 are transferred to the belt 19 in the following manner:
- The belt 19 is extended (or the relative trolley is caused to slide forward), while holding the mat still;
- The rotation of the belt 8 is started so as to move forward at the same speed as the belt 19, while transferring the packages to the latter;
- In the meantime the new packages are transferred from belt 3 over to belt 8.

At this point the situation is as shown in Figure 4, where the belt 19 is fully extended and the two packages are transferred to the same, while belt 8 holds the two new packages coming from the belt 3.

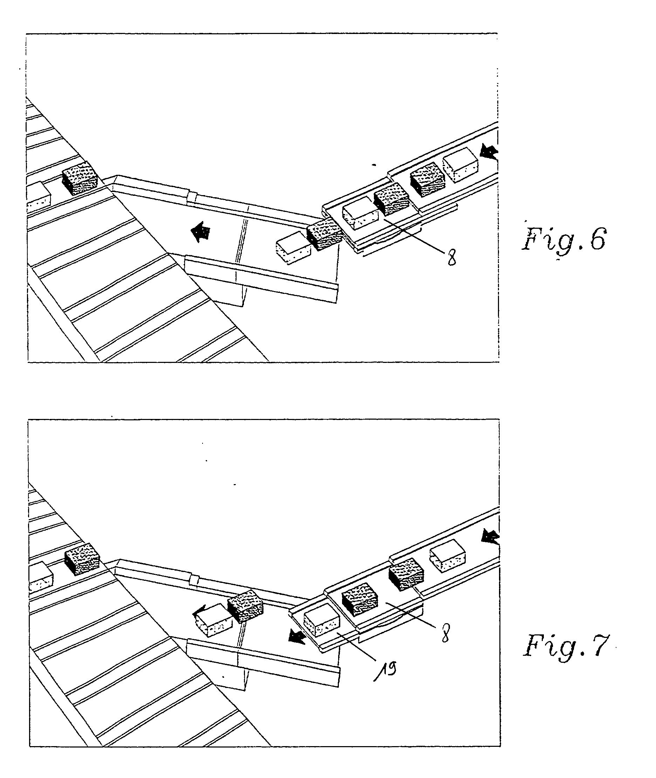

During the third phase (Figure 5) the belt 19 starts to "withdraw" while starting the mat in such a way that the relative speed of the packages on the same remains nil.

The packages are thus deposited without sliding on the feeding line represented by the belt 11.

In the meantime the support 9 rotates (if necessary) to arrange the two subsequent packages in the proper loading sequence.

The packages present on the belt 11 are moved toward the switching machine (Figures 6 and 7), while the belt 19 resumes its forward motion to receive the packages actually present on belt 8, where in the meantime the two subsequent packages coming from the belt 3 are about to be loaded.

Based on the configuration described, it is therefore not only possible to achieve the arrangement of the pairs of items to be loaded onto the machine, but also their motion so as to position them in the proper direction and to maintain the same during all their transfers.

Moreover, the positioning phase of the items to vary their loading order may, if necessary, occur simultaneously with the forward motion of the packages which are already arranged and the approaching motion of the packages which follow, thus exploiting what could be a dead moment in the operation of the equipment unit, without thereby affecting the overall productivity of the machine.

An expert of the trade may provide for several modifications and variations, all of which could nevertheless be deemed to fall within the scope of this invention as defined in the appended claims.

For instance, the same equipment unit may also be utilized for loading items on a switching machine, by arranging them in a pre-established direction.

The known technologies, as shown in the description relating to the state of the technology, are in fact capable of allowing a precise positioning of the items, but make it difficult to orient them. Whereas it is in fact easy to orient the items with their flanks parallel to those of the feeding belt, it is more complex to orient them at an angle of 45° with respect to the former, so that, at the end of all the motions needed for their feeding to the machine, the items loaded on the switching machine find themselves aligned parallel to the flanks of the latter.

This purpose can be served by the equipment unit according to this invention.

The operator loads the items on the small mat 1 by lining them up with the fixed reference 12, and transferring the items in succession to the small belts 2 and 3.

The belt 3 unloads the items directly onto the intermediate belt 19 which deposits them, as described above, on the loading belt 11 while the loading belt stands still, at an essentially zero relative speed, thus avoiding any risk that the items may suffer motions, rotations or the like as a result of impacting with the moving belt.

At this point the items find themselves on the loading belt in the required position and at the optimum orientation for their subsequent loading phase.

## Claims

1. An equipment unit for the automatic loading of multiple items (6) arranged on the same unit of a switching machine, of a type comprising several feeding belts (1, 2, 3, 8) capable of receiving the items and transferring them, while appropriately spaced, to a loading belt (11) capable of receiving such items and to feed them to a machine (5), **characterized in that** said feeding belts (1, 2, 3, 8) comprise at least one belt (8) mounted on a support (9) capable of rotating 180° to invert the order of transferring the items (6) on said belt (8) and means (19) is provided for transferring the items (6) from said belt (8) to said loading belt (11) at a substantially zero relative velocity.

2. An equipment unit according to claim 1, **characterized in that** said means (19) for transferring the items (6) at a zero relative velocity from said belt (8) to said loading belt (11) includes a rotating mat mounted on a sliding support (10) capable of moving between a position in which said rotating mat is withdrawn beneath the upstream feeding belt (8) to a position from which said rotating mat is moved forward to deposit the items (6) on said loading belt (11), while means is provided to move said sliding support (10) forward or rotate said transfer belt at the same speed as the upstream feeding belt (8), based on the provision of other means capable of rotating said transfer belt at an equal and opposite speed to the sliding speed of the sliding support (10) while the same withdraws beneath the upstream feeding belt (8), so as to deposit the items on the loading belt (11) at zero relative velocity.

3. An equipment unit according to claim 1, **characterized in that** said feeding belts (1, 2, 3, 8) comprise at least a pair of belts (1, 2) capable of being moved at different speeds, so as to arrange the items (6) at a certain spacing between each other.

4. An equipment unit according to claim 1, **characterized in that** it also provides means (7) for checking the destination of the items (6) and of commanding the rotation of the support (9) of said at least one belt (8) so as to rotate said belt by 180°, thus inverting the order of the items (6).

5. An equipment unit according to claim 4, **characterized in that** said means (7) capable of checking the destination of the items (6) are constituted by electronic scanning devices associated with one of the feeding belts (1, 2, 3, 8).

6. An equipment unit according to claim 1, **characterized in that** the equipment unit includes a feeding belt (1) with a reference point and/or indexing means (12) capable of allowing the alignment of the items (6) according to a pre-established direction.

7. An equipment unit according to claim 1, **characterized in that** said loading belt (11) is arranged at a 45° angle with respect to said feeding belts (1, 2, 3, 8).

## Patentansprüche

1. Geräteeinheit für das automatische Laden einer Mehrzahl von Artikeln (6), die auf derselben Einheit einer Sortiermaschine angeordnet sind, mit verschiedenen Zuführbändern (1, 2, 3, 8), die in der Lage sind, die Artikel aufzunehmen und sie, während sie sich im richtigen Abstand befinden, zu einem Ladeband (11) zu überführen, welches in der Lage ist, diese Artikel aufzunehmen und sie zu einer Maschine (5) zuzuführen, **dadurch gekennzeichnet, daß** die Zuführbänder (1, 2, 3, 8) mindestens ein Band (8) aufweisen, welches auf einem Träger (9) angebracht ist, der in der Lage ist, um 180° zu drehen, um die Reihenfolge des Überführens der Artikel (6) auf dem Band (8) umzukehren, und ein Mittel (19) vorgesehen ist für das Übertragen der Artikel (6) von dem Band (8) zu dem Ladeband (11) mit einer Relativgeschwindigkeit von im wesentlichen null.

2. Geräteeinheit nach Anspruch 1, **dadurch gekennzeichnet, daß** das Mittel (19) für das Überführen der Artikel (6) mit einer Relativgeschwindigkeit von null von dem Band (8) zu dem Ladeband (11) eine drehende Matte aufweist, die auf einer Gleitstütze (10) angebracht ist, welche in der Lage ist, sich zwischen einer Position, in welcher die drehende Matte unter dem aufstromigen Zuführband (8) zurückgezogen wird, zu einer Position zu bewegen, aus welcher die drehende Matte nach vom bewegt wird, um die Artikel (6) auf dem Ladeband (11) abzulegen, während ein Mittel vorgesehen ist, um die Gleitstütze (10) nach vorn zu bewegen oder das Überführungsband mit derselben Geschwindigkeit wie das aufstromige Zuführband (8) zu drehen, basierend auf der Schaffung anderer Mittel mit der Fähigkeit, das Überführungsband mit einer gleichen und entgegengesetzten Geschwindigkeit zu der Gleitgeschwindigkeit der Gleitstütze (10) zu drehen, während sich dieselbe unter dem aufstromigen Zuführband (8) zurückzieht; um die Artikel auf dem Ladeband (11) mit einer relativen Geschwindigkeit null abzulegen.

3. Geräteeinheit nach Anspruch 1, **dadurch gekennzeichnet, daß** die Zuführbänder (1, 2, 3, 8) mindestens ein Paar von Bändern (1, 2) aufweisen, die in der Lage sind, mit unterschiedlichen Geschwindigkeiten bewegt zu werden, um die Artikel (6) mit einem gewissen Abstand zwischen einander anzuordnen.

4. Geräteeinheit nach Anspruch 1, **dadurch gekennzeichnet, daß** sie auch Mittel (7) vorsieht zum Prüfen der Bestimmung der Artikel (6) und zur Befehlsgabe der Drehung des Trägers (9) des mindestens einen Bandes (8), um dieses Band um 180° zu drehen und dadurch die Reihenfolge der Artikel (6) umzukehren.

5. Geräteeinheit nach Anspruch 4, **dadurch gekennzeichnet, daß** die Mittel (7), die in der Lage sind, die Bestimmung der Artikel (6) zu prüfen, aus elektronischen Abfühlvorrichtungen aufgebaut sind, die zu einem der Zuführbänder (1, 2, 3, 8) gehören.

6. Geräteeinheit nach Anspruch 1, **dadurch gekennzeichnet, daß** die Geräteeinheit ein Zuführband (1) aufweist mit einem Referenzpunkt und/oder Schaltmitteln (12), die in der Lage sind, das Ausrichten der Artikel (6) entsprechend einer vorher festgesetzten Richtung zu ermöglichen.

7. Geräteeinheit nach Anspruch 1, **dadurch gekennzeichnet, daß** das Ladeband (11) bezüglich der Zuführbänder (1, 2, 3, 8) unter einem Winkel von 45° angeordnet ist.

## Revendications

1. Equipement pour le chargement automatique d'articles multiples (6) disposés sur le même bloc d'une unité de transfert, d'un type comprenant plusieurs courroies d'alimentation (1, 2, 3, 8) capables de recevoir les articles et de les transférer, ceux-ci étant espacés de manière appropriée, vers une courroie de chargement (11) capable de recevoir ces articles et de les alimenter vers une machine (5), **caractérisé en ce que** lesdites courroies d'alimentation (1, 2, 3, 8) comprennent au moins une courroie (8) montée sur un support (9) capable de pivoter sur 180° pour inverser l'ordre de transfert des articles (6) sur ladite courroie (8) et des moyens (19) sont fournis pour transférer les articles (6) de ladite courroie (8) vers ladite courroie de chargement (11) à une vitesse relative sensiblement nulle.

2. Equipement selon la revendication 1, **caractérisé en ce que** lesdits moyens (19) pour transférer les articles (6) à une vitesse relative nulle de ladite courroie (8) vers ladite courroie de chargement (11) comprennent un tapis rotatif monté sur un support coulissant (10) capable de se déplacer entre une position dans laquelle ledit tapis rotatif est retiré sous la courroie d'alimentation (8) en amont et une position à partir de laquelle ledit tapis rotatif est avancé pour déposer les articles (6) sur ladite courroie de chargement (11), tandis que des moyens sont fournis pour avancer ledit support coulissant (10) ou faire tourner ladite courroie de transfert à la même vitesse que la courroie d'alimentation (8) en amont, en se basant sur la fourniture d'autres moyens capables de tourner ladite courroie de transfert à une vitesse égale et opposée à la vitesse de coulissement du support coulissant (10) tandis que ce dernier se retire sous la courroie d'alimentation (8) en amont, de manière à déposer les articles sur la courroie de chargement (11) à une vitesse relative nulle.

3. Equipement selon la revendication 1, **caractérisé en ce que** lesdites courroies d'alimentation (1, 2, 3, 8) comprennent au moins une paire de courroies (1, 2) capables d'être déplacées à différentes vitesses, de manière à disposer les articles (6) selon un certain espacement entre eux.

4. Equipement selon la revendication 1, **caractérisé en ce qu'**il fournit également des moyens (7) pour contrôler la destination des articles (6) et pour commander la rotation du support (9) de ladite au moins une courroie (8) de manière à tourner ladite courroie de 180°, inversant ainsi l'ordre des articles (6).

5. Equipement selon la revendication 4, **caractérisé en ce que** lesdits moyens (7) capables de contrôler la destination des articles (6) sont constitués de dispositifs de balayage électroniques associés avec l'une des courroies d'alimentation (1, 2, 3, 8).

6. Equipement selon la revendication 1, **caractérisé en ce que** l'équipement comprend une courroie d'alimentation (1) avec un point de référence et/ou des moyens d'avancement (12) capables de permettre l'alignement des articles (6) selon une direction préétablie.

7. Equipement selon la revendication 1, **caractérisé en ce que** ladite courroie de chargement (11) est disposée selon un angle de 45° par rapport auxdites courroies d'alimentation (1, 2, 3, 8).
